# EUROPEAN PATENT SPECIFICATION

(11) **EP 2 441 803 B1**
(45) Date of publication and mention of the grant of the patent: **03.04.2013**
(21) Application number: 11184624.2
(22) Date of filing: 11.10.2011
(51) Int. Cl.: C08L 83/04, C09D 183/04, C08K 3/00, C08K 3/22, C08K 9/02

(54) **Flame retardant organopolysiloxane composition**
Flammenhemmende Organoplysiloxan-Zusammensetzung
Composition d'organopolysiloxane ignifuge

(30) Priority: 12.10.2010 JP 2010229380
(43) Date of publication of application: 18.04.2012
(73) Proprietor: Shin-Etsu Chemical Co., Ltd., Tokyo (JP)
(72) Inventor: Kameda, Norio, Annaka-shi, Gunma (JP)
(74) Representative: TER MEER - STEINMEISTER & PARTNER GbR

(56) References cited:
- EP-A1- 2 182 031
- DATABASE WPI Week 200807 Thomson Scientific, London, GB; AN 2008-B05063 XP002665933, & JP 2007 261923 A (KAMISHIMA KAGAKU KOGYO KK) 11 October 2007 (2007-10-11)

## Description

### TECHNICAL FIELD

This invention relates to a flame retardant organopolysiloxane composition having heat resistance and exhibiting an appropriate flow as a potting or coating material.

### BACKGROUND ART

Organopolysiloxane compositions are used for electrical and electronic parts because of their excellent heat resistance, electric properties, and adhesion. For safety, these compositions are often required to have flame retardancy as well.

For imparting flame retardancy to organopolysiloxane compositions, it is known from JP-A H04-18451, JP-A H05-125285, and JP-A H05-230376 that platinum compounds and inorganic fillers are compounded therein. Of the inorganic fillers, aluminum hydroxide is particularly useful because of the substantial endothermic effect of crystal water. However, the aluminum hydroxide gradually loses crystal water even at a low temperature below 200°C, which gives rise to a problem with respect to heat resistance. The problem is that on use of the cured organopolysiloxane composition at high temperature, the aluminum hydroxide added thereto releases water (vapor) to form bubbles in the cured organopolysiloxane. The bubbles thus formed become appearance defects and can detract from water or moisture proofness and electrical insulation.

It was then proposed to use magnesium hydroxide having a decomposition temperature of about 350°C as a flame retardant (JP-A H11-181305). Magnesium hydroxide solves the heat resistance problem despite lower flame retardancy than aluminum hydroxide.

When the flame retardant organopolysiloxane composition is used as a potting or coating material, flow is another requirement. The prior art techniques described above are difficult to meet both flow and flame retardancy.

Meanwhile, JP-A 2007-261923 discloses a resin composition comprising an ester base resin and magnesium hydroxide coated with a layer of a mixture of silicon and aluminum compounds, the composition being improved in hydrolysis resistance and tracking resistance.

### Citation List

Patent Document 1: JP-A H04-18451
Patent Document 2: JP-A H05-125285 (EP 0483776)
Patent Document 3: JP-A H05-230376 (EP 0543292)
Patent Document,4: JP-A H11-181305 (EP 0906933)
Patent Document 5: JP-A 2007-261923

EP 2 182 032 discloses a polyorganosiloxane composition comprising boehmite (aluminium hydrate).

### SUMMARY OF INVENTION

An object of the invention is to provide a flame retardant organopolysiloxane composition which exhibits an appropriate flow as a potting or coating material and in which the cured product has so improved heat resistance that it may form no bubbles and thus maintain its water or moisture-proofness and electrical insulation even upon exposure to high temperature.

The inventor has found that an improved flame retardant organopolysiloxane composition can be prepared by adding magnesium hydroxide coated with a layer of a mixture of silicon and aluminum compounds to an organopolysiloxane composition. The composition has an appropriate flow for use as a potting or coating material. The cured composition has so improved heat resistance that it forms no bubbles and thus maintains its water or moisture-proofness and electrical insulation even when exposed to high temperature.

It is noted that JP-A 2007-261923 describes magnesium hydroxide coated with a layer of a mixture of silicon and aluminum compounds, but refers nowhere its application to organopolysiloxane compositions. It is the inventor's discovery that an organopolysiloxane composition can be prepared by compounding magnesium hydroxide coated with a layer of a mixture of silicon and aluminum compounds in an organopolysiloxane, and that the resulting composition exhibits good flow and flame retardancy as well as the advantages described just above.

In one aspect, the invention provides a flame retardant organopolysiloxane composition comprising:
(A) 100 parts by weight of an organopolysiloxane having the general formula (1): 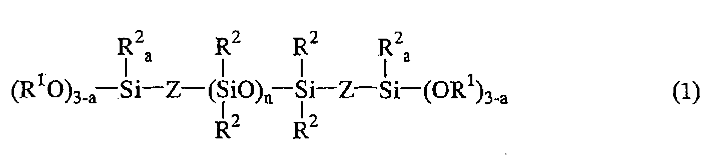 wherein R¹ is each independently hydrogen or a monovalent hydrocarbon group, R² is each independently a substituted or unsubstituted monovalent hydrocarbon group, Z is each independently oxygen or a divalent hydrocarbon group, a is 0,
   1 or 2, and n is an integer of at least 10,
(B) 5 to 75% of by weight, based on the total weight of the organopolysiloxane composition, of magnesium hydroxide coated with a layer of a mixture of silicon and aluminum compounds, and
(C) 1 to 50 parts by weight of an organosilicon compound having the general formula (2): 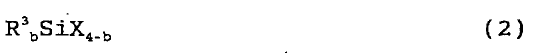
wherein R³ is a substituted or unsubstituted monovalent hydrocarbon group, X is each independently a hydrolyzable group, and b is 0, 1 or 2, with the proviso that R³ may be the same or different when b is 2, and/or a partial hydrolytic condensate thereof.

Preferably, component (B) in particulate form has an average particle size of 0.1 to 20 µm.

In preferred embodiments, the composition may further comprise (D) crystalline silica or heavy calcium carbonate, (E) a curing catalyst, and/or (F) fumed silica.

The composition is typically used as a potting or coating material.

Also contemplated herein is an electrical or electronic part comprising the composition defined herein. The composition is potted around the part or coated onto the part.

### ADVANTAGEOUS EFFECTS OF INVENTION

The flame retardant organopolysiloxane composition of the invention eliminates the drawbacks of prior art organopolysiloxane compositions. The composition flows so that it may be used as a potting or coating material. The composition cures into a product which forms no bubbles even when exposed to high temperature, indicating that the cured composition has excellent heat resistance and flame retardancy.

### DESCRIPTION OF EMBODIMENTS

The notation (Cn-Cm) means a group containing from n to m carbon atoms per group. The abbreviation "pbw" stands for parts by weight.

The organopolysiloxane composition of the invention is a condensation curable organopolysiloxane composition containing magnesium hydroxide coated with a layer of a mixture of silicon and aluminum compounds. In terms of cure mode, the composition is not limited to one-pack type and may be of multi-pack type such as two or three-pack type. A one or two-pack composition is preferred for efficient operation.

### Component A

Component (A) which is a base component of the organopolysiloxane composition is an organopolysiloxane having the general formula (1).

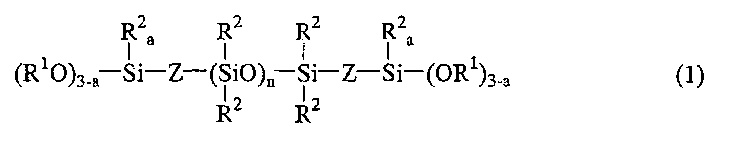

Herein R¹ is each independently hydrogen or a monovalent hydrocarbon group, R² is each independently a substituted or unsubstituted monovalent hydrocarbon group, Z is each independently oxygen or a divalent hydrocarbon group, a is 0, 1 or 2, and n is an integer of at least 10. The organopolysiloxane as component (A) may be used alone or in admixture of two or more.

In formula (1), R¹ is independently hydrogen or a monovalent hydrocarbon group. Suitable monovalent hydrocarbon groups are of 1 to 6 carbon atoms, preferably of 1 to 4 carbon atoms. Examples include alkyl groups such as methyl, ethyl and propyl, alkenyl groups such as vinyl, allyl and isopropenyl, and phenyl. When a is 0 or 1, R¹ is preferably a monovalent hydrocarbon group, more preferably an unsubstituted C₁-C₄ alkyl, and most preferably methyl or ethyl. When a is 2, R¹ is preferably hydrogen.

R² is a substituted or unsubstituted monovalent hydrocarbon group, preferably of 1 to 15 carbon atoms, more preferably of 1 to 10 carbon atoms. When substituted, the substituent groups include halogens such as chlorine, fluorine and bromine, and cyano. Examples of R² include alkyl groups such as methyl, ethyl, propyl, isopropyl, butyl, 2-ethylbutyl and octyl; cycloalkyl groups such as cyclohexyl and cyclopentyl; alkenyl groups such as vinyl and allyl; aryl groups such as phenyl, tolyl, xylyl, naphthyl, biphenyl and phenanthryl; aralkyl groups such as benzyl and phenylethyl; halogenated alkyl, aryl or cycloalkyl groups such as chloromethyl, trichloropropyl, trifluoropropyl, bromophenyl and chlorocyclohexyl; and cyanoalkyl groups such as 2-cyanoethyl, 3-cyanopropyl and 2-cyanobutyl. Of these, methyl, vinyl, phenyl and trifluoropropyl are preferred, with methyl being most preferred.

Z is each independently oxygen or a divalent hydrocarbon group. When Z is a divalent hydrocarbon group, exemplary groups include C₁-C₁₂, more specifically C₁-C₁₀, and even more specifically C₁-C₅ alkylene groups such as methylene, ethylene and propylene. Inter alia, oxygen and ethylene are preferred as Z.

In formula (1), n is an integer of at least 10 and is preferably such a number that the organopolysiloxane may have a viscosity of 10 to 100,000 mPa-s, more preferably 100 to 20,000 mPa-s, and even more preferably 200 to 10,000 mPa-s at 25°C. If the viscosity is too low, the cured composition may have insufficient mechanical properties. Too high a viscosity may render the composition too viscous to flow. It is noted that the viscosity may be measured by a rotational viscometer.

### Component B

Component (B) is magnesium hydroxide coated with a layer of a mixture of a silicon compound and an aluminum compound, sometimes simply referred to as "coated magnesium hydroxide." It is used to impart flame retardancy, flow and heat resistance to the organopolysiloxane composition. Component (B) may be used alone or in admixture of two or more species which are different in average particle size and/or surface treatment.

Magnesium hydroxide has excellent heat resistance due to a very high decomposition temperature of about 350°C. Magnesium hydroxide in particulate form typically has an average particle size of up to 20 µm, preferably 0.1 to 10 µm, and more preferably 0.5 to 10 µm. If the particle size is too small, the composition may be too viscous to flow. Too large particles may fail to impart sufficient flame retardancy, and become defective in appearance when the composition is used as a coating material. The average particle size is determined as a weight average particle size D50 (a particle size at cumulative 50% by weight or median diameter) in particle size distribution measurement by the laser light diffraction method.

The coating layer on magnesium hydroxide consists of a silicon compound which is formed using sodium silicate, colloidal silica or the like, and an aluminum compound which is formed using sodium aluminate, alumina sol, aluminum chloride or the like.

Further the coated magnesium hydroxide may be surface treated, that is, treated on the coating layer of a mixture of silicon and aluminum compounds, with fatty acid esters, silane coupling agents, phosphates or the like.

The coated magnesium hydroxide is commercially available. For example, Magseeds EP1-A and EP2-A (Konoshima Chemical Co., Ltd.) may be used.

The coated magnesium hydroxide (B) may be added in an amount of 5 to 75% by weight and preferably 10 to 50% by weight based on the total weight of the organopolysiloxane composition. Outside the range, less amounts of component (B) may lead to insufficient flame retardancy whereas excessive amounts of component (B) may detract from flow.

### Component C

Component (C) is an organosilicon compound having at least two hydrolyzable groups per molecule, represented by the general formula (2), and/or a partial hydrolytic condensate thereof.

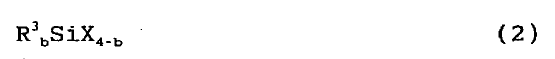

Herein R³ is a monovalent hydrocarbon group, preferably of 1 to 10 carbon atoms, more preferably 1 to 8 carbon atoms, which is unsubstituted or substituted with a group other than amino and guanidyl, X is each independently a hydrolyzable group, and b is 0, 1 or 2, with the proviso that R³ may be the same or different when b is 2. Component (C) serves as a curing agent in the composition. It may be used alone or in admixture of two or more.

In formula (2), R³ is a monovalent hydrocarbon group, including C₁-C₁₀, and more preferably C₁-C₈ alkyl, alkenyl and aryl groups and substituted forms of the foregoing in which some or all hydrogen atoms bonded to carbon atoms are substituted by halogens such as chlorine, fluorine and bromine. Examples of R³ are as illustrated for R² and preferably methyl, ethyl, propyl, vinyl, and phenyl.

Examples of the hydrolyzable group X include C₁-C₄ alkoxy groups such as methoxy, ethoxy and butoxy; ketoxime groups such as dimethylketoxime and methylethylketoxime; acyloxy groups such as acetoxy; alkenyloxy groups such as isopropenyloxy and isobutenyloxy; amino groups such as N-butylamino and N,N-diethylamino; and amide groups such as N-methylacetamide.

Component (C) is added in an amount of 1 to 50 pbw and preferably 3 to 20 pbw per 100 pbw of component (A). The composition with less than 1 pbw of component (C) may undergo insufficient crosslinking upon curing, failing to produce a cured product with the desired rubber elasticity. The composition with more than 50 pbw of component (C) may undergo substantial shrinkage upon curing, resulting in a cured product with poor mechanical properties.

### Component D

Component (D) serves to improve the flame retardancy of the composition and impart fluidity thereto. Component (D) preferably has a larger particle size than component (B), specifically a particle size of 0.1 to 50 µm and more preferably 1 to 30 µm. With too small a particle size, the composition may have an insufficient flow for use as a potting material. Too large a particle size may lead to a shortage of strength.

Component (D) is crystalline silica or heavy calcium carbonate, and preferably crystalline silica. Component (D) may be used alone or in admixture of two or more components which are different in average particle size and/or shape.

Crystalline silica is in powder form. It may be surface treated with organosilicon compounds such as organoalkoxysilanes, organosilazanes, silanols or alkoxy-containing organopolysiloxanes, prior to use. Also heavy calcium carbonate may be surface treated with fatty acids, paraffins or the like, prior to use.

Component (D) is optional since it is added to assist the function of component (B). When used, the component (D) is preferably added in an amount of 5 to 60% by weight, more preferably 10 to 50% by weight based on the total weight of the composition. Outside the range, less amounts of component (D) may achieve an insufficient flow-improving effect whereas the composition with excessive amounts of component (D) may be difficult to knead.

### Component E

Since the organopolysiloxane composition is of condensation cure type, a curing catalyst as component (E) may be used therein if necessary. Examples of the curing catalyst include alkyltin ester compounds such as dibutyltin diacetate, dibutyltin dilaurate and dibutyltin dioctoate; titanic acid esters and titanium chelate compounds such as tetraisopropoxytitanium, tetra-n-butoxytitanium and tetrakis(2-ethylhexoxy)titanium, dipropoxybis(acetylacetonato)titanium and
titanium isopropoxyoctyleneglycol; organometallic compounds containing zinc, iron, cobalt, manganese or aluminum such as zinc naphthenate, zinc stearate, zinc 2-ethyloctoate,
iron 2-ethylhexoate, cobalt 2-ethylhexoate,
manganese 2-ethylhexoate, cobalt naphthenate and alkoxyaluminum compounds; aminoalkylalkoxysilanes such as 3-aminopropyltriethoxysilane and
N-(β-aminoethyl)-y-aminopropyltrimethoxysilane;
amine compounds and salts thereof such as hexylamine and dodecylamine phosphate: quaternary ammonium salts such as benzyltriethylammonium acetate; alkali metal salts of lower fatty acids such as potassium acetate, sodium acetate and lithium oxalate; dialkylhydroxylamines such as dimethylhydroxylamine and diethylhydroxylamine; guanidyl-containing silanes and siloxanes such as tetramethylguanidylpropyltrimethoxysilane,
tetramethylguanidylpropylmethyldimethoxysilane and tetramethylguanidylpropyltris(trimethylsiloxy)silane. The curing catalyst may be used alone or in admixture of two or more.

The curing catalyst is preferably added in an amount of 0.001 to 10 pbw, more preferably 0.01 to 5 pbw per 100 pbw of component (A).

### Component F

Fumed silica is preferably compounded as component (F) when the cured organopolysiloxane composition is required to have strength. Fumed silica may or may not be surface treated with silazanes, organohalosilanes, silane coupling agents, organopolysiloxanes or the like.

Fumed silica is preferably added in an amount of 1 to 50 pbw, more preferably 3 to 30 pbw per 100 pbw of component (A).

### Other fillers

In addition to components (B), (D) and (F), various fillers may be optionally compounded in the organopolysiloxane composition as long as the objects of the invention are not compromised. Examples of the filler include precipitated silica, diatomaceous earth; metal oxides such as iron oxide, zinc oxide, titanium oxide and aluminum oxide; metal nitrides such as boron nitride and aluminum nitride; metal carbonates such as calcium carbonate (other than heavy calcium carbonate), magnesium carbonate and zinc carbonate; asbestos, glass wool, carbon black, fine powder mica, fused silica powder; powdered synthetic resins such as polystyrene, polyvinyl chloride and polypropylene. The amount of the filler is not particularly limited as long as the objects of the invention are not compromised, and typically ranges from 0 to 500 pbw per 100 pbw of component (A). Preferably the filler is dried to remove moisture, prior to use.

The fillers may or may not be surface treated with silane coupling agents, organopolysiloxanes, fatty acids or the like.

### Other additives

Optional additives may be compounded in the organopolysiloxane composition. Suitable additives include pigments, dyes, antidegradants, antioxidants, antistatic agents, and flame retardant agents such as platinum compounds, antimony oxide and chlorinated paraffins.

Also included are thixotropic agents such as polyether; mildew-proofing agents; anti-fungus agents; and adhesive aids, for example, amino silanes such as γ -aminopropyltriethoxysilane and 3-(2-aminoethylamino)propyltrimethoxysilane and epoxysilanes such as γ-glycidoxypropyltrimethoxysilane and β -(3, 4-epoxycyclohexyl)ethyltrimethoxysilane. These additives may be used in any desired amounts as long as the objects of the invention are not compromised.

The organopolysiloxane composition is prepared by intimately mixing components (A) to (F), other fillers, and various additives as illustrated above, preferably in a dry atmosphere (in the substantial absence of moisture).

Once the organopolysiloxane composition is coated or molded at room temperature in air, it cures with airborne moisture. The curing conditions may be the same as commonly used for commercial room temperature-curable organopolysiloxane compositions.

### EXAMPLE

Examples and Comparative Examples are given below for further illustrating the invention although the invention is not limited thereto. All parts are by weight. The viscosity is a measurement at 25°C.

### Example 1

An organopolysiloxane composition was prepared in anhydrous conditions by adding 100 parts of magnesium hydroxide coated with a layer of a Si and Al compound mixture (Magseeds EP1-A, Konoshima Chemical Co., Ltd., average particle size 3.0 µm), an amount (20 ppm of platinum based on the total weight of the mixture) of an alcohol solution of chloroplatinic acid as a flame retardancy improver, 8 parts of phenyltri(isopropenyloxy)siiane, 1 part of 3-aminopropyltriethoxysilane, and 0.8 part of 1,1,3,3-tetramethyl-2-[3-(trimethoxysilyl)propyl]guanidine to 100 parts of dimethylpolysiloxane blocked with hydroxyl groups at both ends of the molecular chain having a viscosity of 700 mPa-s, blending them and further mixing while degassing. The resulting organopolysiloxane composition was allowed to cure at 23°C and 50% RH for 7 days.

### Example 2

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 70 parts of magnesium hydroxide coated with a layer of a Si and Al compound mixture (Magseeds EP1-A, Konoshima Chemical Co., Ltd., average particle size 3.0 µm), an amount (20 ppm of platinum based on the total weight of the mixture) of an alcohol solution of chloroplatinic acid as a flame retardancy improver, 8 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine were added to the mixture, blended, and further mixed while degassing. The resulting organopolysiloxane composition was allowed to cure at 23°C and 50% RH for 7 days.

### Example 3

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 70 parts of magnesium hydroxide coated with a layer of a Si and Al compound mixture (Magseeds EP1-A, Konoshima Chemical Co., Ltd., average particle size 3.0 µm), an amount (20 ppm of platinum based on the total weight of the mixture) of an alcohol solution of chloroplatinic acid as a flame retardancy improver, and 5 parts of phenyltri(isopropenyloxy)silane were added to the mixture, blended, and further mixed while degassing, yielding a base compound.

A curing agent was prepared in anhydrous conditions by adding 20 parts of 3-aminopropyltriethoxysilane and 10 parts of 1,1,3,3-tetramethyl-2-[3-(trimethoxysilyl)propyl]guanidine to 70 parts of dimethylpolysiloxane blocked with methyl groups at both ends of the molecular chain having a viscosity of 300 mPa-s, blending, and further mixing while degassing. The base compound and the curing agent were combined in a weight ratio of 100:10 to form an organopolysiloxane composition, which was allowed to cure at 23°C and 50% RH for 3 days.

### Example 4

An organopolysiloxane composition was prepared in anhydrous conditions by adding 70 parts of magnesium hydroxide coated with a layer of a Si and A1 compound mixture (Magseeds EP2-A, Konoshima Chemical Co., Ltd., average particle size 1.0 µm), an amount (20 ppm of platinum based on the total weight of the mixture) of an alcohol solution of chloroplatinic acid as a flame retardancy improver, 10 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine to 100 parts of dimethylpolysiloxane blocked with hydroxyl groups at both ends of the molecular chain having a viscosity of 700 mPa-s, blending, and further mixing while degassing. The resulting organopolysiloxane composition was allowed to cure at 23°C and 50% RH for 7 days.

### Example 5

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 35 parts of magnesium hydroxide coated with a layer of a Si and A1 compound mixture (Magseeds EP1-A, Konoshima Chemical Co., Ltd., average particle size 3.0 µm), 35 parts of crystalline silica (CRYSTALITE VXS-2, Tatsumori Ltd., average particle size 5.0 µm), an amount (20 ppm of platinum based on the total weight of the mixture) of an alcohol solution of chloroplatinic acid as a flame retardancy improver, 8 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine were added to the mixture, blended, and further mixed while degassing. The resulting organopolysiloxane composition was allowed to cure at 23°C and 50% RH for 7 days.

### Example_ 6

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 35 parts of magnesium hydroxide coated with a layer of a Si and Al compound mixture (Magseeds EP1-A, Konoshima Chemical Co., Ltd., average particle size 3.0 µm), 35 parts of calcium carbonate (Super S, Maruo Calcium Co., Ltd., average particle size 6.3 µm), an amount (20 ppm of platinum based on the total weight of the mixture) of an alcohol solution of chloroplatinic acid as a flame retardancy improver, 8 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine were added to the mixture, blended, and further mixed while degassing. The resulting organopolysiloxane composition was allowed to cure at 23°C and 50% RH for 7 days.

### Example 7

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 70 parts of magnesium hydroxide coated with a layer of a Si and Al compound mixture (Magseeds EP1-A, Konoshima Chemical Co., Ltd., average particle size 3.0 µm), an amount (20 ppm of platinum based on the total weight of the mixture) of an alcohol solution of chloroplatinic acid as a flame retardancy improver, 10 parts of methyltris(methylethylketoxime)silane, 1 part of 3-aminopropyltriethoxysilane, and 0.1 part of dioctyltin dilaurate were added to the mixture, blended, and further mixed while degassing. The resulting organopolysiloxane composition was allowed to cure at 23°C and 50% RH for 7 days.

### Example 8

A mixture was prepared by adding 5 parts of fumed silica to 50 parts of dimethylpolysiloxane blocked with trimethoxysilyl groups at both ends of the molecular chain having a viscosity of 900 mPa-s, heating at 150°C, and mixing under vacuum for 2 hours. After cooling, the mixture was dispersed on a three-roll mill. In anhydrous conditions, 50 parts of dimethylpolysiloxane blocked with trimethoxysilyl groups at both ends of the molecular chain having a viscosity of 900 mPa-s, 70 parts of magnesium hydroxide coated with a layer of a Si and Al compound mixture (Magseeds EP1-A, Konoshima Chemical Co., Ltd., average particle size 3.0 µm), an amount (20 ppm of platinum based on the total weight of the mixture) of an alcohol solution of chloroplatinic acid as a flame retardancy improver, 8 parts of a partial hydrolytic condensate of methyltrimethoxysilane, 1 part of 3-glycidoxypropyltrimethoxysilane, and 3 parts of dipropoxybis(acetylacetonato)titanium were added to the mixture, blended, and further mixed while degassing. The resulting organopolysiloxane composition was allowed to cure at 23°C and 50% RH for 7 days.

### Comparative Example 1

An organopolysiloxane composition was prepared in anhydrous conditions by adding 100 parts of aluminum hydroxide (H320I: Showa Denko K.K.), 10 parts of phenyltri(isopropenyloxy)silane, 1 part of
3-aminopropyltriethoxysilane, and 0.8 part of 1,1,3,3-tetramethyl-2-[3-(trimethoxysilyl)propyl]guanidine to 100 parts of dimethylpolysiloxane blocked with hydroxyl groups at both ends of the molecular chain having a viscosity of 700 mPa-s, blending, and further mixing while degassing. The resulting organopolysiloxane composition was allowed to cure at 23°C and 50% RH for 7 days.

### Comparative Example 2

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 70 parts of untreated magnesium hydroxide (Konoshima Chemical Co., Ltd., average particle size 3.0 µm), an amount (20 ppm of platinum based on the total weight of the mixture) of an alcohol solution of chloroplatinic acid as a flame retardancy improver, 8 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine were added to the mixture, blended, and further mixed while degassing. The resulting organopolysiloxane composition was allowed to cure at 23°C and 50% RH for 7 days.

### Comparative Example 3

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 70 parts of magnesium hydroxide treated with vinyltrimethoxysilane (Konoshima Chemical Co., Ltd., average particle size 1.0 µm), an amount (20 ppm of platinum based on the total weight of the mixture) of an alcohol solution of chloroplatinic acid as a flame retardancy improver, 8 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine were added to the mixture, blended, and further mixed while degassing. The resulting organopolysiloxane composition was allowed to cure at 23°C and 50% RH for 7 days.

### Comparative Example 4

A mixture was prepared by adding 5 parts of fumed silica to 50 parts of dimethylpolysiloxane blocked with hydroxyl groups at both ends of the molecular chain having a viscosity of 700 mPa-s, heating at 150°C, and mixing under vacuum for 2 hours. After cooling, the mixture was dispersed on a three-roll mill. In anhydrous conditions, 50 parts of dimethylpolysiloxane blocked with hydroxyl groups at both ends of the molecular chain having a viscosity of 700 mPa-s, 5 parts of magnesium hydroxide coated with a layer of a Si and A1 compound mixture (Magseeds EP1-A, Konoshima Chemical Co., Ltd., average particle size 3.0 µm), an amount (20 ppm of platinum based on the total weight of the mixture) of an alcohol solution of chloroplatinic acid as a flame retardancy improver, 8 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine were added to the mixture, blended, and further mixed for degassing. The resulting organopolysiloxane composition was allowed to cure at 23°C and 50% RH for 7 days.

### Comparative Example 5

A composition was prepared in anhydrous conditions by adding 400 parts of magnesium hydroxide coated with a layer of a Si and Al compound mixture (Magseeds EP1-A, Konoshima Chemical Co., Ltd., average particle size 3.0 µm), an amount (20 ppm of platinum based on the total weight of the mixture) of an alcohol solution of chloroplatinic acid as a flame retardancy improver, 8 parts of phenyltri(isopropenyloxy)silane, 1 part of 3-aminopropyltriethoxysilane, and 0.8 part of 1,1,3,3-tetramethyl-2-[3-(trimethoxysilyl)propyl]guanidine to 100 parts of dimethylpolysiloxane blocked with hydroxyl groups at both ends of the molecular chain having a viscosity of 700 mPa-s, blending, and further mixing while degassing. The resulting organopolysiloxane composition was allowed to cure at 23°C and 50% RH for 7 days.

### Comparative Example 6

A composition was prepared by adding 100 parts of magnesium hydroxide coated with a layer of a Si and Al compound mixture (Magseeds EP1-A, Konoshima Chemical Co., Ltd., average particle size 3.0 µm) to 100 parts of poly(lactic acid) resin. The resulting composition was cured by press molding at 150°C.

The compositions as prepared or cured in Examples 1 to 8 and Comparative Examples 1 to 6 were evaluated for flame retardancy, heat resistance, and flow. Flame retardancy was examined using a sample of 2 mm thick and rated according to Underwriters' Laboratories standard UL-94. Heat resistance was examined by heating at 200°C for 2 hours, and rated good "○" when no bubbles formed and poor "×" when bubbles formed. Flow was examined by casting the uncured composition on a glass plate of 5 cm × 5 cm, and rated good "○" when the composition spread over the entire glass plate and poor "×" when the composition did not spread at all.

The results are shown in Tables 1 and 2.

**Table 1**

| Example | 1 | 2 | 3 | 4 | 5 | 6 | 7 | 8 |
|---|---|---|---|---|---|---|---|---|
| Flame retardancy | V-0 Equiv. | V-0 Equiv. | V-0 Equiv. | V-0 Equiv. | V-0 Equiv. | V-0 Equiv. | V-0 Equiv. | V-0 Equiv. |
| Heat resistance | ○ | ○ | ○ | ○ | ○ | ○ | ○ | ○ |
| Flow | ○ | ○ | ○ | ○ | ○ | ○ | ○ | ○ |

**Table 2**

| Comparative Example | 1 | 2 | 3 | 4 | 5 | 6 |
|---|---|---|---|---|---|---|
| Flame retardancy | V-0 Equiv. | V-0 Equiv. | V-0 Equiv. | HB Equiv. | V-0 Equiv. | HB Equiv. |
| Heat resistance | × | ○ | ○ | ○ | ○ | × |
| Flow | ○ | × | × | ○ | × | × |

As seen from these results, the compositions within the scope of the invention cure into products which exhibit excellent heat resistance and flow while maintaining flame retardancy. The composition of Comparative Example 1 using aluminum hydroxide, the compositions of Comparative Examples 2 and 3 using magnesium hydroxides outside the scope of the invention, and the compositions of Comparative Examples 4 and 5 containing the coated magnesium hydroxide in amounts outside the range of the invention do not satisfy either one of flame retardancy, heat resistance and flow. The composition of Comparative Example 6 comprising an ester resin and the coated magnesium hydroxide is less heat resistant and poor in the flow by which the compositions of the invention are characterized.

## Claims

1. A flame retardant organopolysiloxane composition comprising:
(A) 100 parts by weight of an organopolysiloxane having the general formula (1): 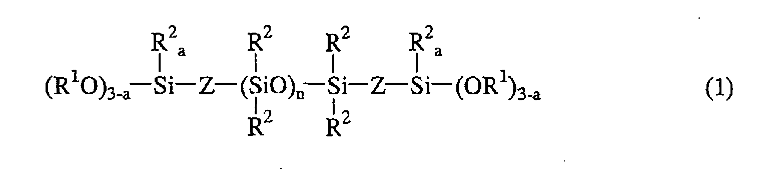 wherein R¹ is each independently hydrogen or a monovalent hydrocarbon group, R² is each independently a substituted or unsubstituted monovalent hydrocarbon group, Z is each independently oxygen or a divalent hydrocarbon group, a is 0, 1 or 2, and n is an integer of at least 10,
(B) 5 to 75% of by weight, based on the total weight of the organopolysiloxane composition, of magnesium hydroxide coated with a layer of a mixture of silicon and aluminum compounds, and
(C) 1 to 50 parts by weight of an organosilicon compound having the general formula (2):
R³_{b}SiX_{4-b} (2)
wherein R³ is a substituted or unsubstituted monovalent hydrocarbon group, X is each independently a hydrolyzable group, and b is 0, 1 or 2, with the proviso that R³ may be the same or different when b is 2, and/or a partial hydrolytic condensate thereof.

2. The composition of claim 1 wherein component (B) has an average particle size of 0.1 to 20 µm.

3. The composition of claim 1 or 2, further comprising (D) crystalline silica or heavy calcium carbonate.

4. The composition of any one of claims 1 to 3, further comprising (E) a curing catalyst.

5. The composition of any one of claims 1 to 4, further comprising (F) fumed silica.

6. The composition of any one of claims 1 to 5 which is used as a potting or coating material.

7. An electrical or electronic part comprising the composition of any one of claims 1 to 5, the composition being potted or coated.

## Patentansprüche

1. Flammenhemmende Organopolysiloxan-Zusammensetzung, umfassend:
(A) 100 Gewichtsteile eines Organopolysiloxans der eigenen Formel (1): 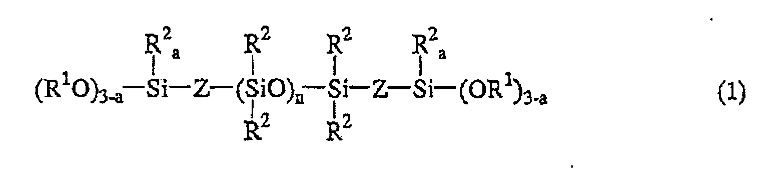 worin R¹ jeweils unabhängig Wasserstoff oder eine einwertige Kohlenwasserstoffgruppe bedeutet, R² jeweils unabhängig eine substituierte oder unsubsituierte, einwertige Kohlenwasserstoffgruppe bedeutet, Z jeweils unabhängig Sauerstoff oder eine zweiwertige Kohlenwasserstoffgruppe bedeutet, a 0,1 oder 2 ist, und n eine ganze Zahl von mindestens 10 ist,
(B) 5 bis 75 Gewichtsprozent, bezogen auf das Gesamtgewicht der Organopolysiloxan-Zusammensetzung, Magnesiumhydroxid, das mit einer Schicht aus einer Mischung aus Silicium- und Aluminiumverbindungen überzogen ist, und
(C) 1 bis 50 Gewichtsteile einer Organosiliciumverbindung der allgemeinen Formel (2):
**R³_{b}SiX_{4-b}** (2)
worin R³ eine substituierte oder unsubstituierte, einwertige Kohlenwasserstoffgruppe ist, X jeweils unabhängig eine hydrolysierbare Gruppe ist, und b 0,1 oder 2 ist, mit der Maßgabe, dass R³ gleich oder verschieden sein kann, wenn b 2 ist, und/oder ein partielles hydrolytisches Kondensat davon.

2. Zusammensetzung nach Anspruch 1, wobei Komponente (B) eine durchschnittliche Teilchengröße von 0,1 bis 20 µm besitzt.

3. Zusammensetzung nach Anspruch 1 oder 2, umfassend weiterhin (D) kristallines Silica oder schweres Calciumcarbonat.

4. Zusammensetzung nach mindestens einem der Ansprüche 1 bis 3, umfassend weiterhin (E) einen Härtungskatalysator.

5. Zusammensetzung nach mindestens einem der Ansprüche 1 bis 4, umfassend weiterhin (F) pyrogene Kieselsäure.

6. Zusammensetzung nach mindestens einem der Ansprüche 1 bis 5, welche als Einbettungs- bzw. Verguß- oder Beschichtungsmaterial verwendet wird.

7. Elektrisches oder elektronisches Teil, umfassend die Zusammensetzung nach mindestens einem der Ansprüche 1 bis 5, wobei die Zusammensetzung eingebettet bzw. vergossen oder beschichtet ist.

## Revendications

1. Composition d'organopolysiloxane ignifuge comprenant :
(A) 100 parties en poids d'un organopolysiloxane répondant à la formule générale (1) : 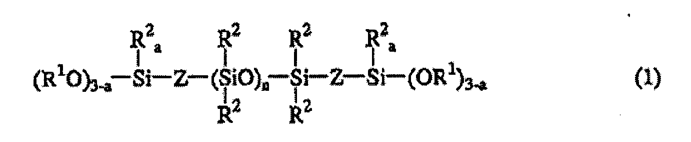 dans laquelle les groupes R¹ représentent chacun indépendamment un atome d'hydrogène ou un groupe hydrocarboné monovalent, les groupes R² représentent chacun indépendamment un groupe hydrocarboné monovalent substitué ou non substitué, les groupes Z représentent chacun indépendamment un atome d'oxygène ou un groupe hydrocarboné divalent, a vaut 0, 1 ou 2, et n est un nombre entier d'au moins 10,
(B) de 5 à 75 % en poids, en se basant sur le poids total de la composition d'organopolysiloxane, d'hydroxyde de magnésium revêtu d'une couche d'un mélange de composés de silicium et d'aluminium, et
(C) de 1 à 50 parties en poids d'un composé d'organosilicium répondant à la formule générale (2) :
R³_{b}SiX_{4-b} (2)
dans laquelle R³ représente un groupe hydrocarboné monovalent substitué ou non substitué, les groupes X représentent chacun indépendamment un groupe hydrolysable, et b vaut 0, 1 ou 2, à condition que les groupes R³ puissent être identiques ou différents lorsque b vaut 2, et/ou un condensat hydrolytique partiel de celui-ci.

2. Composition selon la revendication 1, dans laquelle le composant (B) a une granulométrie moyenne de 0,1 à 20 µm.

3. Composition selon la revendication 1 ou 2, comprenant en outre (D) de la silice cristalline ou du carbonate de calcium lourd.

4. Composition selon l'une quelconque des revendications 1 à 3, comprenant en outre (E) un catalyseur de durcissement.

5. Composition selon l'une quelconque des revendications 1 à 4, comprenant en outre (F) de la silice fumée.

6. Composition selon l'une quelconque des revendications 1 à 5, qui est utilisée en tant que matériau d'enrobage ou de revêtement.

7. Pièce électrique ou électronique, comprenant la composition selon l'une quelconque des revendications 1 à 5, la composition étant enrobée ou revêtue.
